# EUROPEAN PATENT SPECIFICATION

(11) **EP 3 339 333 B1**
(45) Date of publication and mention of the grant of the patent: **07.10.2020**
(21) Application number: 16206419.0
(22) Date of filing: 22.12.2016
(51) Int. Cl.: C08F 4/651, C08F 110/02, C08F 210/16

(54) **ZIEGLER-NATTA CATALYST AND PREPARATION THEREOF**
ZIEGLER-NATTA-KATALYSATOR UND HERSTELLUNG DAVON
CATALYSEUR ZIEGLER-NATTA ET SA PRÉPARATION

(43) Date of publication of application: 27.06.2018
(73) Proprietor: Borealis AG, 1220 Vienna (AT)
(72) Inventor: Denifl, Peter, 4020 Linz (AT); Leinonen, Timo, 06750 Tolkkinen (FI); Nissinen, Ville, 80100 Joensuu (FI); Pakkanen, Tuula, 80140 Joensuu (FI); Bazhenov, Andrey, 40520 Jyväskylä (FI); Linnolahti, Mikko, 80130 Joensuu (FI); Pakkanen, Tapani, 80100 Joensuu (FI)
(74) Representative: Dehns

(56) References cited:
- EP-A1- 2 065 405
- EP-A1- 3 059 264
- EP-A2- 0 810 235

## Description

This invention relates to a solid Ziegler-Natta catalyst component for producing olefin polymers and preparation of said catalyst component. Further the invention relates to a Ziegler Natta catalyst comprising said solid catalyst component, Group 13 metal compound as cocatalyst and optionally external electron donors. The invention further relates to the use of said catalyst component in producing olefin polymers, especially ethylene and propylene polymers.

### Background of the invention

Ziegler-Natta (ZN) type polyolefin catalysts are well known in the field of producing olefin polymers, like ethylene and propylene (co)polymers. Generally the catalysts comprise at least a catalyst component formed from a transition metal compound of Group 4 to 6 of the Periodic Table (IUPAC, Nomenclature of Inorganic Chemistry, 1989), a metal compound of Group 1 to 3 of the Periodic Table (IUPAC), and, optionally, a compound of group 13 of the Periodic Table (IUPAC), and, optionally, an internal organic compound, like an internal electron donor. A ZN catalyst may also comprise further catalyst component(s), such as a cocatalyst and optionally external electron donors

A great variety of Ziegler-Natta catalysts have been developed to fulfill the different demands in reaction characteristics and producing poly(alpha-olefin) resins of desired physical and mechanical performance. Typical Ziegler-Natta catalysts contain a magnesium compound, an aluminium compound and a titanium compound supported on a particulate support. The commonly used particulate supports are Mg dihalide, preferably MgCl₂, based supports, or inorganic oxide type of supports, such as silica, alumina, titania, silica-alumina and silica-titania, typically silica.

Typical Ziegler - Natta catalysts based on MgCl₂ contain a titanium compound and optionally a Group 13 compound, for example, an aluminium compound. Such catalysts are disclosed, for instance, in EP376936, WO 2005/118655 and EP 810235.

The catalyst can be prepared by sequentially contacting the inorganic support with the above mentioned compounds, for example, as described in EP 688794 and WO 99/51646. Alternatively, it can be prepared by first preparing a solution from the components and then contacting the solution with a support, as described in WO 01/55230.

The above described ZN-catalysts are claimed to be useful in olefin polymerisation, for example the production of ethylene (co)polymers.

However, even though many catalysts of prior art show satisfactory properties for many applications there has been the need to modify and improve the properties of the catalysts to achieve desired performance in desired polymerisation processes and desired polymer properties.

Further, nowadays HSE- (health, safety & environment) policies are important factors in the production of catalysts and further polymers. In other words the polymers must fulfill the strict health and environmental requirements of national and international institutions. One class of substances which have been considered as potential harmful compounds is e.g. phthalates, which have been commonly used as internal electron donors in Ziegler-Natta type catalysts.

There have been several attempts to find solutions for producing catalysts without using any non-hazardous or in environmentally and health point of view non-desired compounds in catalyst preparation. One way to modify the catalyst is to use internal organic compounds. Internal organic compounds can be internal electron donors or other compounds affecting the performance of the catalyst, and external additives comprise e.g. external electron donors and/or alkyl halides. Therefore finding internal organic compounds, like internal electron donors being acceptable in HSE point of view is an essential problem to be solved in catalyst development.

US 5,055,535 discloses a method for controlling the molecular weight distribution (MWD) of polyethylene homopolymers and copolymers using a ZN catalyst comprising an electron donor selected from monoethers (e.g. tetrahydrofuran). Use of monoethers, like tetrahydrofuran, is also disclosed e.g. in WO 2007051607 and WO2004055065.

EP0376936 discloses a MgCl₂ supported ZN catalyst, where spray-dried MgCl₂/alcohol support material is treated with a compound of group IA to IIIA (Groups 1, 2 and 13 of the Periodic Table (IUPAC, Nomenclature of Inorganic Chemistry, 1989)) then titanated with a titanium compound, optionally in the presence of internal electron donor. The optional internal donor compound is exemplified to be THF or di-isobutyl phthalate.

EP591224 discloses MgCl₂- based Ziegler-Natta catalyst, where the solid support material is prepared by spray -crystallisation method. As internal donor in catalyst preparation is used phthalic compounds, typically di-2-ethylhexyl phthalates.

In the patent literature there are also widely described Ziegler-Natta catalysts, especially catalysts for propylene polymerisation, comprising non-phthalic esters, like succinates, maleates and benzoates as well diethers or combinations thereof with e.g. phthalates.

All the donors described above are monomeric compounds.

Although much development work in Ziegler-Natta catalyst preparation has been done, there is still room for improvement. In addition to the needs of catalyst properties and performance, like productivity, the chemicals used in the preparation should be from a health, safety and environment point of view acceptable compounds.

### Summary of the invention

It has now been surprisingly found that the many problems of the prior art can be solved, when a specific group of internal organic compounds is used in preparing solid Ziegler-Natta catalyst.

Thus, the object of the present invention is to provide a solid Ziegler-Natta based catalyst component comprising as internal organic compound a compound of formula (I) or formula (II) as defined in claim 1. Further, the object of the present invention is to provide a new method for preparing a solid Ziegler-Natta based catalyst component, where an internal electron donor of formula (I) or of formula (II) is added to the catalyst synthesis. Further, the invention relates to a catalyst comprising said solid Ziegler-Natta based catalyst component, a cocatalyst and optionally external additives. In addition the object of the present invention is to use a compound, as described by formula (I) or formula (II) below, as internal organic compound in Ziegler-Natta catalyst components. Finally, an additional object of the present invention is the use of the solid Ziegler-Natta based catalyst component prepared by the method of the invention in olefin polymerisation process.

In the present disclosure, the term internal organic compound denotes a compound being part of the solid catalyst component, i.e. added during the synthesis of the solid catalyst component. External additives cover any additive, covering but not restricted to, external electron donors, and mean a component being not part of the solid catalyst component, but fed as separate component to the polymerisation process.

### Detailed description of the invention

Accordingly, the present invention relates to solid Ziegler-Natta catalyst component comprising a transition metal compound of Group 4 to 6, and an internal organic compound, selected from linear or branched polyalkyleneimines as defined in formula I, or isomers or mixtures therefrom.

H₂N-(CH₂)ₐ-[(CH₂)_{b}-(N(R¹)-L-)ₙ-(CH₂)_{c}]ₘ-(CH₂)_{d}-NH₂ (I)

wherein,
each a, b, c and d is an integer of 1 to 4, preferably 1 to 2,
n is an integer 3 to 7, preferably 4 to 6,
m is an integer 2 to 100, preferably 2 to 60,
each L is independently an alkylene of 1 to 4 C-atoms, preferably an alkylene of 2 C-atoms
each R¹ is independently H, or a group -L-(N(R²)_{z}(R³)_{y}, wherein L is as defined above,
each R² and R³ are independently H or an C₁ to C₄ amino alkyl, and z and y are 0, 1 or 2, provided that the sum z + y is 2,
or the compound of formula (II) below.

According to a preferred embodiment each a, b, c and d are 2 and L is ethylene.

According to a further preferred embodiment at least one of R¹ in formula (I) is a group - L-(N(R²)_{z}(R³)_{y}. Further it is especially preferred that at least one of R² and R³ is C₁ to C₄ amino alkyl, preferably an amino ethyl group.

The internal electron donor compound of formula (II) is:

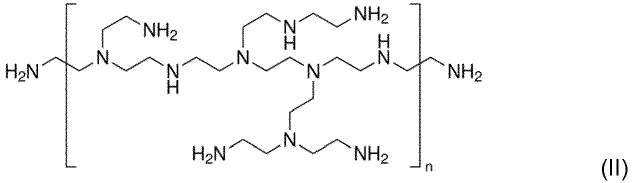

Further, the present invention relates to a method for producing solid Ziegler-Natta catalyst component comprising the steps
a) the providing solid catalyst support particles
b) treating the solid catalyst support particles of step a) with an internal organic compound as defined in formula I and a transition metal compound of Group 4 to 6
c) recovering the solid catalyst component

Further, the present invention relates to the use of internal organic compound as defined in formula I as internal electron donor in solid Ziegler-Natta catalysts.

Further, one object of the invention is to produce C₂ to C₁₀ olefin (co)polymers in the presence of the catalyst in accordance with the present invention. The catalyst of the present invention or produced by the inventive method is especially suitable for producing C₂ to C₆ olefin (co)polymers.

### Preferred embodiments

The invention will be described in the following in greater detail, referring to the particular preferred embodiments. Preferred embodiments are described in dependent claims as well as in the following description.

As used herein, the term Ziegler Natta (ZN) catalyst component is intended to cover a catalyst component comprising a transition metal compound of Group 4 to 6, Nomenclature of Inorganic Chemistry, 1989) and an internal organic compound of formula (I).

The transition metal compound of Group 4 to 6 is preferably a Group 4 transition metal compound or a vanadium compound and is more preferably a titanium compound. Particularly preferably the titanium compound is a halogen-containing titanium compound of the formula X_{y}Ti(OR⁸)_{4-y}, wherein R⁸ is a C₁₋₂₀ alkyl, preferably a C₂₋₁₀ and more preferably a C₂₋₈ alkyl group, X is halogen, preferably chlorine and y is 1, 2, 3 or 4, preferably 3 or 4 and more preferably 4.

Suitable titanium compounds include trialkoxy titanium monochlorides, dialkoxy titanium dichloride, alkoxy titanium trichloride and titanium tetrachloride. Preferably titanium tetrachloride is used

According to further preferred embodiment the internal organic compound is of formula (I), where each of a, b, c and d are 2, and L is ethylene.

According to a further preferred embodiment at least one of R¹ in formula (I) is a group - L- (N(R²)_{z}(R³)_{y}. Further it is especially preferred that at least one of R² and R³ is C₁ to C₄ amino alkyl, preferably an amino ethyl group.

An example for a typical structure representing a branched polyethyleneimine compound is of formula (II)

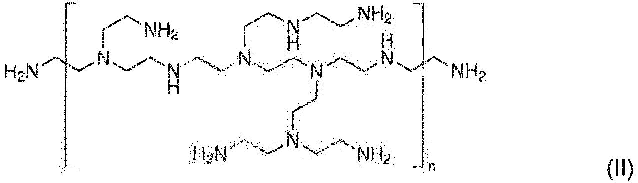

According to a further preferred embodiment the catalyst comprises a Group 2 compound, preferably a Mg compound. A Mg compound is typically used in preparing catalyst support material.

As indicated in prior art description components of catalyst may be supported on a particulate support, such as Mg dihalide, preferably MgCl₂, based support, or inorganic oxide, like silica or alumina based supports. Many typical catalysts, based on inorganic oxides, like silica support, contain Mg, which is added to the catalyst synthesis as a Mg compound. The magnesium compound may be a reaction product of a magnesium dialkyl and an alcohol, typically an alcohol bearing 6 to 16 carbon atoms.

Typically, MgCl₂ based supports are prepared by mixing MgCl₂ with an alcohol (ROH), whereby the alcohol is coordinated with MgCl₂. The solid support MgCl₂*mROH is formed according to the well know methods. As examples, spray drying or spray crystallisation methods can be used to prepare the MgCl₂ based supports. Spherical and granular MgCl₂*mROH support materials are suitable to be used in the present invention. The alcohol in producing MgCl₂*mROH support material is an alcohol ROH, where R is a linear or branched alkyl group containing 1 to 12 carbon atoms, preferably 1 to 8 carbon atoms, like 1 to 4 carbon atoms. Ethanol is typically used as an alcohol. In MgCl₂*mROH, m is 0,2 to 6,0, more preferably 1,0 to 4,0, especially 2,0 to 3,8.

Preparation methods of MgCl₂*mROH support is described in several patents e.g. in EP376936, EP424049, EP655073, US4,071,674 and EP61 4467.

It's also possible to form the MgCl₂ based catalyst starting from metallic magnesium, which is reacted with chlorinated alkane compound in an organic solvent.

The Ziegler-Natta catalyst component may also contain a Group 13 metal compound, preferably an aluminium compound. Particularly preferably the aluminium compound is an aluminium compound of the formula Al(alkyl)ₓX₃₋ₓ (II), wherein each alkyl is independently an alkyl group of 1 to 12 carbon atoms, preferably 1 to 8 carbon atoms, more preferably 1 to 6 carbon atoms, X is halogen, preferably chlorine and 1 < x ≤ 3. The alkyl group can be linear, branched or cyclic, or a mixture of such groups.

Preferred aluminium compounds are dialkyl aluminium chlorides or trialkyl aluminium compounds, for example dimethyl aluminium chloride, diethyl aluminium chloride, di-isobutyl aluminium chloride, and triethylaluminium or mixtures therefrom. Most preferably the aluminium compound is a trialkyl aluminium compound, especially triethylaluminium compound.

According to the method of the present invention it is an essential feature that the internal organic compound, as defined above, is added to the catalyst synthesis.

Preferably the support in the present invention is a MgCl₂ based support. Said support is preferably prepared by contacting MgCl₂ with ethanol and using spray drying or spray crystallisation to form the final solid support material.

Thus, according to the first embodiment of the invention the solid catalyst component is prepared by
i) providing solid MgCl₂ based support,
ii) contacting the solid support of step i) with an internal organic compound of formula (I),
iii) treating the solid support obtained in step ii) with TiCl₄ or
iii') simultaneously with step ii) contacting the solid support with TiCl₄, and
iv) recovering the solid catalyst component.

The final solid catalyst component shall have the internal electron donor of formula (I) amount of 2 to 30 wt-%, preferably 2 to 25 wt-%, or even in the range of 2 to 15 wt-%. Ti amount is in the range of 1,5 to 10 wt-%, typically 1,8 to 8 wt-%, .

The solid MgCl₂ based support is preferably prepared by mixing MgCl₂ with an alcohol (ROH) and the solid support MgCl₂*mROH is formed by known methods. As example, spray drying or spray crystallisation methods can be used to prepare MgCl₂ based support. The alcohol in producing MgCl₂*mROH support material is an alcohol ROH, where R is a linear or branched alkyl group containing 1 to 12 carbon atoms, preferably 1 to 8 carbon atoms, like 1 to 4 carbon atoms, typically ethanol. In MgCl₂*mROH, m is 0,2 to 6,0, more preferably 1,0 to 4,0, especially 2,0 to 3,8, like 2,5 to 3,5.

The activity (gpolymer/(gcat*h)of the catalysts of the invention remains at an acceptable level or is even increased compared to use of a catalyst component of similar type but using a non-polymeric compound as an internal organic compound.

The catalyst of the invention comprises, in addition to the solid catalyst component as defined above, a cocatalyst, which is also known as an activator. Cocatalysts are organometallic compounds of Group 13 metal, typically aluminum compounds. These compounds include alkyl aluminium halides, preferably alkyl aluminium chlorides, such as ethylaluminium dichloride, diethylaluminium chloride, ethylaluminium sesquichloride, and dimethylaluminium chloride. They also include trialkylaluminium compounds, such as trimethylaluminium, triethylaluminium, tri-isobutylaluminium, trihexylaluminium and tri-n-octylaluminium. Also other aluminium alkyl compounds, such as isoprenylaluminium, may be used. Especially preferred cocatalysts are trialkylaluminiums, of which triethylaluminium, trimethylaluminium and tri-isobutylaluminium are particularly used.

The catalyst of the invention may also comprise an external additive, like external donor. External additives that can be used include ether compounds, siloxanes or silanes and/or alkyl halides as is known from prior art. Siloxanes or silanes are commonly used as external donors especially in producing propylene polymers.

The catalyst of the present invention can be used for polymerising C₂ to C₁₀ olefin, preferably C₂ to C₆ olefin, optionally with one or more comonomers. Most commonly produced olefin polymers are polyethylene and polypropylene or copolymers thereof. Commonly used comonomers are alpha-olefin comonomers preferably selected from C₂-C₂₀-alpha-olefins, more preferably are selected from C₂-C₁₀-alpha-olefins, such as ethylene,1-butene, isobutene, 1-pentene, 1-hexene, 4-methyl-1-pentene, 1-heptene, 1-octene, 1-nonene and 1-decene, as well as dienes, such as butadiene, 1,7-octadiene and 1,4-hexadiene, or cyclic olefins, such as norbornene, and any mixtures thereof. Most preferably, the comonomer is ethylene, 1-butene and/or 1-hexene.

Catalyst of the present invention can be used in any commonly used uni- and multimodal processes for producing polyolefins. The polymerizations may be operated in slurry, solution, or gas phase conditions or their combinations. Typically ethylene and propylene (co)polymers are produced in commercial scale in a multimodal process configuration. Such multimodal polymerization processes known in the art comprise at least two polymerization stages. It is preferred to operate the polymerization stages in cascaded mode. Suitable processes comprising cascaded slurry and gas phase polymerization stages are disclosed, among others, in WO92/12182 and WO96/18662 and WO WO98/58975.

In a multimodal polymerisation configuration, the polymerisation stages comprise polymerisation reactors selected from slurry and gas phase reactors. In one preferred embodiment, the multimodal polymerisation configuration comprises at least one slurry reactor, followed by at least one gas phase reactor.

The catalyst may be transferred into the polymerization process by any means known in the art. It is thus possible to suspend the catalyst in a diluent and maintain it as homogeneous slurry. Especially preferred is to use oil having a viscosity from 20 to 1500 mPa·s as diluent, as disclosed in WO-A-2006/063771.lt is also possible to mix the catalyst with a viscous mixture of grease and oil and feed the resultant paste into the polymerization zone. Further still, it is possible to let the catalyst settle and introduce portions of thus obtained catalyst mud into the polymerization zone in a manner disclosed, for instance, in EP-A-428054.

The polymerization in slurry may take place in an inert diluent, typically a hydrocarbon diluent such as methane, ethane, propane, n-butane, isobutane, pentanes, hexanes, heptanes, octanes etc., or their mixtures. Preferably the diluent is a low-boiling hydrocarbon having from 1 to 4 carbon atoms, like propane or a mixture of such hydrocarbons. In propylene polymerisation the monomer is usually used as the reaction medium.

The temperature in the slurry polymerization is typically from 40 to 115 °C, preferably from 60 to 110 °C and in particular from 70 to 100 °C. The pressure is from 1 to 150 bar, preferably from 10 to 100 bar.

The slurry polymerization may be conducted in any known reactor used for slurry polymerization. Such reactors include a continuous stirred tank reactor and a loop reactor. It is especially preferred to conduct the polymerization in loop reactor. Hydrogen is fed, optionally, into the reactor to control the molecular weight of the polymer as known in the art. Furthermore, one or more alpha-olefin comonomers may be added into the reactor. The actual amount of such hydrogen and comonomer feeds depends on the desired melt index (or molecular weight), density or comonomer content of the resulting polymer.

The polymerization in gas phase may be conducted in a fluidized bed reactor, in a fast fluidized bed reactor or in a settled bed reactor or in any combination of these.

Typically the fluidized bed or settled bed polymerization reactor is operated at a temperature within the range of from 50 to 100 °C, preferably from 65 to 90 °C. The pressure is suitably from 10 to 40 bar, preferably from 15 to 30 bar.

Also antistatic agent(s) may be introduced into the slurry and/or gas phase reactor if needed. The process may further comprise pre- and post-reactors.

The polymerization steps may be preceded by a pre-polymerisation step. The pre-polymerisation step may be conducted in slurry or in gas phase. Preferably pre-polymerisation is conducted in slurry, and especially in a loop reactor. The temperature in the pre-polymerisation step is typically from 0 to 90 °C, preferably from 20 to 80 °C and more preferably from 30 to 70 °C.

The pressure is not critical and is typically from 1 to 150 bar, preferably from 10 to 100 bar.

The polymerisation may be carried out continuously or batch wise, preferably the polymerisation is carried out continuously.

### EXPERIMENTAL PART

### Measurement methods

### Mg, Ti and organic compound amounts in the catalysts

Magnesium contents of the products were determined by a complexometric EDTA (ethylenediaminetetra-acetic acid) titration. ¹H-NMR spectroscopy (Bruker Avance 400 spectrometer) was used to determine the amounts of organic compounds in the complexes. For the analysis, solid products were dissolved in 10 % (V/V) D₂SO₄/D₂O solution. Number of scans was 32 and relaxation delay 10 s. Sodium acetate was used as an internal standard. Titanium contents of the catalysts were determined by a spectrophotometric method, in which the solids were dissolved in H₂SO₄ solution and addition of H₂O₂ gave solutions of a yellow complex. Reference is made to Vogel, A. I. In A Text-Book of Quantitative Inorganic Analysis Including Elementary Instrumental Analysis, 3rd ed.; Longman: London, 1961; pp 788-790. Shimadzu UVmini-1240 spectrophotometer was used to measure absorbances of the solutions at 410 nm wavelength.

### Melt Flow Rate

MFR₂: 190°C, 2,16 kg load; MFR₅: 190°C, 5 kg load and MFR₂₁: 190°C, 21 kg load

The melt flow rate is measured in accordance with ISO 1133 and is indicated in g/10 min. The MFR is an indication of the flowability, and hence the processability, of the polymer. The higher the melt flow rate, the lower the viscosity of the polymer.

**FFR21/2** is the ratio of MFR₂₁/ MFR₂.

### Melting temperature (Mp)

Melting temperature is measured by Differential Scanning Calorimeter (DSC) according to ISO 11357 using Mettler TA820 Differential Scanning Calorimeter (DSC) on 3± 0,5 mg samples.

### Comonomer (1-butene) amount in polyethylene

The amount of 1-butene in polyethylene copolymer was measured using FTIR spectroscopy according to ASTM D6645-01. The metal plate used in polymer plaque pressing was covered with silicon paper. The calibration was carried out by plotting measured A(1378 cm⁻¹)/Area(2019 cm⁻¹) of the polymer standards to known comonomer wt-%. The instrument used is Bruker Tensor 37.

### EXAMPLES

### Raw materials

TiCl₄ (CAS 7550-45-90) was supplied by commercial source.

PEI (branched polyethylenimine, M_{w}∼800 g/mol) 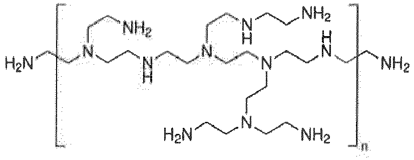 n =∼2

CAS 25987-06-8, provided by Aldrich (408719)

MgCl₂/PEI support:
*δ*-MgCl₂ was synthesized using a method reported in Di Noto, V.; Bresadola, S. New Synthesis of a Highly Active δ-MgCl2 for MgCl2/TiCl4/AlEt3 Catalytic Systems. Macromol. Chem. Phys. 1996, 197, 3827-3835.

### Example 1

### Preparation of MgCl₂-EtOH support

A nitrogenated autoclave of capacity 110 I was charged with 35 kg of dry MgCl₂ and 80 I of dry ethanol. The reaction mixture was melted at 140 °C with mixing. After mixing of 8 hours, the clear, homogenized mixture was supplied using compressed nitrogen at a rate of 10 kg/h with the aid of a nozzle into spray chamber cooled with nitrogen to -20 °C.

### Example 2

### Preparation of the catalysts CAT1 and CAT2

Branched polyethyleneimine (PEI) was first added to MgCl₂-EtOH support prepared according to Example 1 in an autoclave. MgCl₂-EtOH support, PEI and toluene were packed to the autoclave in a clove box. A PEI/Mg molar ratio of 0.9 was used. The autoclave was heated at 90 °C for 22 h. The product formed was separated with a filtration and washed with toluene.
Addition of TiCl₄ to MgCl₂/EtOH/PEI support was conducted in glassreactor. A slurry of support (2.6 g) and heptane (12 ml) was prepared in a clove box. The slurry was constantly mixed with a magnetic stirrer and cooled to 10 °C. TiCl₄ (16 ml; (Ti)/(EtOH) mol/mol = 5.5) was added slowly. During the addition of TiCl₄ color of the support turned to yellow. After 30 min of mixing, temperature of the system was slowly raised until temperature of 110 °C was reached. After 60 minutes of mixing, liquid phase of the reaction mixture was removed using a double ended needle. The product was washed twice with TiCl₄/toluene mixture (1:1 vol/vol) (110 °C), once with toluene (90 °C) and 3 times with heptane (90 °C). The product was dried in vacuum at room temperature for one day. The catalyst obtained is denoted by CAT 1.

CAT1 was further washed in order to remove remaining impurities (mainly titanium ethoxide). The catalyst was washed twice with TiCl₄ (110 °C), four times with toluene (110 °C) and twice with heptane (room temperature). The catalyst was dried in vacuum at room temperature for one day. The catalyst obtained is denoted by CAT2.

PEI/Mg mass and molar ratios in different steps of the catalyst preparation are presented in Table 1. PEI/Mg mass and molar ratios stayed constant during the whole catalyst preparation, indicating strong coordination of PEI to MgCl₂, as shown in Table 1. The addition of TiCl₄ or even extensive washing did not decrease the PEI content of the catalyst.

**Table1. PEI/Mg ratios in different steps of catalyst preparation and in final catalyst**

| Preparation step/product | PEI/Mg wt/wt | (PEI)/(Mg) Mol/mol |
|---|---|---|
| Addition of PEI to MgCl₂/EtOH support* | 1.6 | 0.92 |
| MgCl₂/EtOH/PEI in support | 1.7 | 0.96 |
| CAT2 | 1.7 | 0.96 |

| | | |
|---|---|---|
| * amounts of reagents put into the reaction mixture | | |

### Ethylene homopolymerization

For ethylene polymerization, 15-25 mg of catalyst, 50 ml heptane and triethyl aluminum (molar ratio Al/Ti = 100) were packed to an autoclave. The autoclave was heated to 50 °C. The ethylene feed (2 bar) was started after 30 min from the beginning of the heating. After 60 min from the starting of the ethylene feed, polymerization was stopped by venting off the ethylene gas and by adding acidic ethanol. Polyethylene formed was washed with ethanol and dried at 60 °C. PEI, Ti and EtO contents in the catalysts CAT1 and CAT2, and activity of CAT1 and CAT2 are disclosed in Table 2.

**Table2. PEI, Ti and EtO contents and activity of CAT1 and CAT2**

| | PEI wt-% | Ti wt-% | EtO wt-% | Activity gPE/(gcat*h) |
|---|---|---|---|---|
| CAT1 | 10,8 | 7,7 | 5,7 | 360 |
| CAT2 | 24,4 | 4,2 | 1,5 | 350 |

### Example 3

### Preparation of the catalyst CAT3

MgCl₂/PEI support was prepared by adding branched PEI on *δ*-MgCl₂. Synthesis of *δ*-MgCl₂ was conducted with Grignard-Wurtz reaction in an autoclave without any electron donor using metallic Mg and 1-chlorobutane as starting materials and octane as solvent. After washing and drying, *δ*-MgCl₂ was recrystallized in the presence of PEI in an autoclave. Toluene was used as solvent. The autoclave was heated at 130 °C for 2 h. After washing and drying the product, TiCl₄ was introduced to the system. Addition of TiCl₄ was conducted in an autoclave using toluene as solvent (100 °C/2 h). A Ti/Mg molar ratio of 10:1 was used. After heating, the product was washed (twice with10 ml toluene and twice with 10 ml heptane). The first wash with toluene was conducted at 90 °C and the others at room temperature. The product was dried in vacuum.

### Examples 4 and 5

### Preparation of catalysts CAT4 and CAT5

PEI and TiCl₄ were added to *δ*-MgCl₂ simultaneously using toluene as solvent. *δ*-MgCl₂, PEI, TiCl₄ and toluene were packed to an autoclave, which was heated at 100 °C for 2 h. Different Mg/donor molar ratios were used to obtain catalysts with different PEI contents. Ti/Mg molar ratio of 10:1 was used. The product was washed as in the case of CAT3.

### Comparative catalyst 1 (C-CAT1)

C-CAT1 refers to the comparative catalyst which was prepared as above, but without any electron donor.

### Ethylene homopolymerization

Ethylene polymerization was conducted as in example 2. The chemical compositions and the activities of the catalysts CAT3, CAT4, CAT5 and C-CAT1 in ethylene polymerization are presented in Table 3.

**Table3. Chemical compositions and activities of the catalysts CAT3, CAT4, CAT5 and C-CAT1 in ethylene polymerisation**

| | Mg wt-% | PEI wt-% | Ti wt-% | Activity gPE/(gcat*h) |
|---|---|---|---|---|
| C-CAT 1 | 25,0 | 0,0 | 2,0 | 79 |
| CAT3 | 21,3 | 6,4 | 2,0 | 40 |
| CAT4 | 19,3 | 8,3 | 3,3 | 137 |
| CAT5 | 14,4 | 10,2 | 7,7 | 178 |

Activities of CAT4 and CAT5 were higher than that of the comparative catalyst

### Bench-scale ethylene copolymerization with 1-butene

The catalyst was tested in copolymerization with 1-butene. Triethylaluminum (TEA) was used as a co-catalyst with an Al/Ti molar ratio of 15. The polymerization reaction was carried out in a 3 L bench-scale reactor in accordance with the following procedure: An empty 3L bench-scale reactor was charged with 55 mL of 1-butene at 20 °C and stirred at 200 rpm. Then 1250 mL of propane was added to the reactor as a polymerization medium, followed by the addition of hydrogen gas (0.75 bar). The reactor was heated to 85 °C, and ethylene (3.7 bar) was added batchwise (final molar ratio C4/C2 is 770 mol/mol). The catalyst and the co-catalyst were added together (a few seconds of pre-contact between catalyst and TEA) to the reactor with additional 100 mL of propane. The total reactor pressure was maintained at 38.3 within +/- 0.2 bar accuracy by continuous ethylene feed. The polymerization was stopped after 60 min by venting off the monomers and H₂. The obtained polymer was left to dry in a fume hood overnight before weighing. Ethylene-1-butene polymerisation results are disclosed in Table 4. As catalysts were used CAT1, CAT2 and C-CAT2.

### Comparative catalyst 2 (C-CAT2)

As Comparative catalyst C-CAT2 was used a catalyst prepared by the following method:

### Complex preparation:

87 kg of toluene was added into the reactor. Then 45.5 kg Bomag A in heptane was also added in the reactor. 161 kg 99.8 % 2-ethyl-1-hexanol was then introduced into the reactor at a flow rate of 24-40 kg/h. The molar ratio between BOMAG-A and 2-ethyl-1-hexanol was 1:1.83.

### Solid catalyst component preparation:

275 kg silica (ES747JR of Crossfield, having average particle size of 20 µm) activated at 600 °C in nitrogen was charged into a catalyst preparation reactor. Then, 411 kg 20 % EADC (2.0 mmol/g silica) diluted in 555 litres pentane was added into the reactor at ambient temperature during one hour. The temperature was then increased to 35 °C while stirring the treated silica for one hour. The silica was dried at 50 °C for 8.5 hours. Then 655 kg of the complex prepared as described above (2 mmol Mg/g silica) was added at 23 °C during ten minutes. 86 kg pentane was added into the reactor at 22 °C during ten minutes. The slurry was stirred for 8 hours at 50 °C. Finally, 52 kg TiCl₄ was added during 0.5 hours at 45 °C. The slurry was stirred at 40 °C for five hours. The catalyst was then dried by purging with nitrogen.

**Table 4. Ethylene-1-butene polymerisation results**

| Catalyst | Activity Kg PE/(gcat*h) | C₄ wt% | MFR2 g/10min | MFR21 g/10min | Mp °C | FFR21/2 |
|---|---|---|---|---|---|---|
| CAT1 | 11 | 4.3 | 0,91 | 24,5 | 125,0 | 27 |
| CAT2 | 9,5 | 3.8 | 0,98 | 22,4 | 124,6 | 22,9 |
| C-CAT2 | 6,2 | 4,1 | 2,3 | 56 | 123,2 | 24,3 |

The activity of the catalysts CAT1 and CAT2 was about double of the activity of C-CAT2.

## Claims

1. A solid Ziegler-Natta catalyst component comprising a transition metal compound of Groups 4 to 6, and an internal organic compound, wherein the internal organic compound is selected from:
linear or branched polyalkyleneimines of formula (I), or isomers or mixtures therefrom
H₂N-(CH₂)ₐ-[(CH₂)_{b}-(N(R¹)-L-)ₙ-(CH₂)_{c}]ₘ-(CH₂)_{d}-NH₂ (I)
wherein,
each a, b, c and d is an integer of 1 to 4, preferably 1 to 2,
n is an integer 3 to 7, preferably 4 to 6,
m is 2 to 60,
each L is independently an alkylene of 1 to 4 C-atoms, preferably an alkylene of 2 C-atoms
each R¹ is independently H, or a group -L-(N(R²)_{z}(R³)_{y}, wherein L is as defined above, each R² and R³ are independently H or an C₁ to C₄ amino alkyl, and z and y are 0, 1 or 2, provided that the sum z + y is 2; or
wherein the internal organic compound is of formula (II) 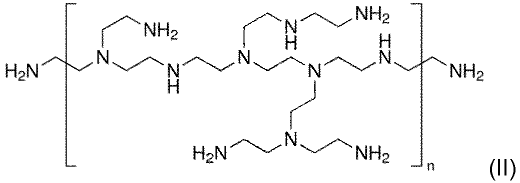
wherein n is approximately 2.

2. A solid Ziegler-Natta catalyst component according to claim 1, wherein each a, b, c and d are 2 and L is ethylene.

3. A solid Ziegler-Natta catalyst component according to claim 1 or 2, wherein at least one of R¹ in formula (I) is a group -L-(N(R²)_{z}(R³)_{y}.

4. A solid Ziegler-Natta catalyst component according to any of claims 1 to 3, wherein at least one of R² and R³ is C₁ to C₄ amino alkyl, preferably an amino ethyl group.

5. A solid Ziegler-Natta catalyst component according to any of claims 1 to 4, wherein the transition metal compound of Group 4 to 6 is a transition metal compound of Group 4, preferably a Ti compound.

6. A solid Ziegler-Natta catalyst component according to any of the preceding claims, wherein the catalyst component is supported on a particulate support, preferably a MgCl₂ based support.

7. A Ziegler-Natta catalyst comprising the solid Ziegler-Natta catalyst component according to any of claims 1 to 6 and a cocatalyst selected from organometallic compounds of Group 13 metal, preferably aluminum compounds.

8. A method for producing a solid Ziegler-Natta catalyst component comprising
i) providing solid MgCl₂ based support,
ii) contacting the solid support of step i) with: an internal organic compound of formula (I), or isomers or mixtures therefrom
H₂N-(CH₂)ₐ-[(CH₂)_{b}-(N(R¹)-L-)ₙ-(CH₂)_{c}]ₘ-(CH₂)_{d}-NH₂ (I)
wherein,
each a, b, c and d is an integer of 1 to 4, preferably 1 to 2,
n is an integer 3 to 7, preferably 4 to 6,
m is 2 to 60,
each L is independently an alkylene of 1 to 4 C-atoms, preferably an alkylene of 2 C-atoms
each R¹ is independently H, or a group - L- (N(R²)_{z}(R³)_{y}, wherein L is as defined above, each R² and R³ are independently H or an C₁ to C₄ amino alkyl, and z and y are 0, 1 or 2, provided that the sum z + y is 2; or
an internal organic compound of formula (II) 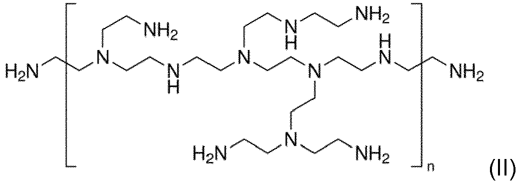 wherein n is approximately 2;
iii) treating the solid support obtained in step ii) with TiCl₄ or
iii') simultaneously with step ii) contacting the solid support with TiCl₄, and
iv) recovering the solid catalyst component.

9. A method according to claim 8, wherein each a, b, c and d are 2 and L is ethylene.

10. A method according to claim 8 or 9, wherein at least one of R¹ in formula (I) is a group-L-(N(R²)_{z}(R³)_{y}.

11. A method according to any of claims 8 to 10, wherein at least one of R² and R³ is C₁ to C₄ amino alkyl, preferably an amino ethyl group.

12. Use of the internal organic compound as defined in any of claims 1 to 4 as internal electron donor in solid Ziegler-Natta catalysts.

13. A process for producing C₂ to C₁₀ olefin (co)polymers comprising polymerising an C₂ to C₁₀ olefin or a mixture thereof in the presence of: the solid catalyst component as defined in any of claims 1 to 6 or produced according to the method as defined in any of claims 8 to 11; and an organometallic compound of a Group 13 metal as a cocatalyst.

14. A process according to claim 13 wherein a catalyst as defined in claim 7 is used.

## Patentansprüche

1. Feste Komponente eines Ziegler-Natta-Katalysators, umfassend eine Übergangsmetallverbindung der Gruppen 4 bis 6 und eine interne organische Verbindung, wobei die interne organische Verbindung ausgewählt ist aus:
linearen oder verzweigten Polyalkyleniminen nach Formel (I), oder Isomeren oder Gemischen davon
H₂N-(CH₂)ₐ-[(CH₂)_{b}-(N(R¹)-L-)ₙ-(CH₂)_{c}]ₘ-(CH₂)_{d}-NH₂ (I)
wobei
a, b, c und d jeweils eine Ganzzahl von 1 bis 4, bevorzugt 1 bis 2 ist,
n eine Ganzzahl von 3 bis 7, bevorzugt 4 bis 6 ist,
m 2 bis 60 ist,
L jeweils unabhängig ein Alkylen von 1 bis 4 C-Atomen, bevorzugt ein Alkylen von 2 C-Atomen ist
R¹ jeweils unabhängig H oder eine Gruppe -L-(N(R²)_{z}(R³)_{y} ist, wobei L wie oben definiert ist, R² und R³ jeweils unabhängig H oder ein C₁ bis C₄ Aminoalkyl sind, und z und y 0, 1 oder 2 sind, vorausgesetzt dass die Summe z + y gleich 2 ist; oder
wobei die interne organische Verbindung aus Formel (II) besteht 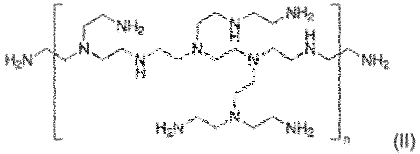
wobei n ungefähr 2 ist.

2. Feste Komponente eines Ziegler-Natta-Katalysators nach Anspruch 1, wobei a, b, c und d jeweils 2 sind und L Ethylen ist.

3. Feste Komponente eines Ziegler-Natta-Katalysators nach Anspruch 1 oder 2, wobei zumindest eines der R¹ in Formel (I) eine Gruppe -L-(N(R²)_{z}(R³)_{y} ist.

4. Feste Komponente eines Ziegler-Natta-Katalysators nach einem der Ansprüche 1 bis 3, wobei zumindest eines von R² und R³ C₁ bis C₄ Aminoalkyl, bevorzugt eine Aminoethylgruppe ist.

5. Feste Komponente eines Ziegler-Natta-Katalysators nach einem der Ansprüche 1 bis 4, wobei die Übergangsmetallverbindung von Gruppe 4 bis 6 eine Übergangsmetallverbindung von Gruppe 4, bevorzugt eine Ti-Verbindung ist.

6. Feste Komponente eines Ziegler-Natta-Katalysators nach einem der vorstehenden Ansprüche, wobei die Komponente des Katalysators auf einem teilchenförmigen Träger, bevorzugt einem Träger auf MgCl₂-Basis getragen wird.

7. Ziegler-Natta-Katalysator, umfassend die feste Komponente eines Ziegler-Natta-Katalysators nach einem der Ansprüche 1 bis 6 und einen Cokatalysator, ausgewählt aus organometallischen Verbindungen von Gruppe 13-Metall, bevorzugt Aluminiumverbindungen.

8. Erzeugungsverfahren für eine feste Komponente eines Ziegler-Natta-Katalysators, umfassend
i) Bereitstellen von festem Träger auf MgCl₂-Basis,
ii) Kontaktieren des festen Trägers aus Schritt i) mit einer internen organischen Verbindung nach Formel (I) oder Isomeren oder Gemischen davon
H₂N-(CH₂)ₐ-[(CH₂)_{b}-(N(R¹)-L-)ₙ-(CH₂)_{c}]ₘ-(CH₂)_{d}-NH₂ (I)
wobei
a, b, c und d jeweils eine Ganzzahl von 1 bis 4, bevorzugt 1 bis 2 ist,
n eine Ganzzahl von 3 bis 7, bevorzugt 4 bis 6 ist,
m 2 bis 60 ist,
L jeweils unabhängig ein Alkylen von 1 bis 4 C-Atomen, bevorzugt ein Alkylen von 2 C-Atomen ist
R¹ jeweils unabhängig H oder eine Gruppe - L- (N(R²)_{z}(R³)_{y} ist, wobei L wie oben definiert ist, R² und R³ jeweils unabhängig H oder ein C₁ bis C₄ Aminoalkyl sind, und z und y 0, 1 oder 2 sind, vorausgesetzt dass die Summe z + y gleich 2 ist; oder
eine interne organische Verbindung nach Formel (II) 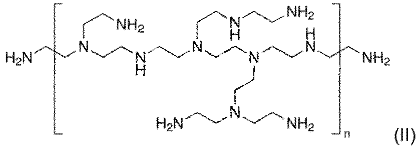 wobei n ungefähr 2 ist;
iii) Behandeln des in Schritt ii) erhaltenen festen Trägers mit TiCl₄ oder
iii') gleichzeitig mit Schritt ii) Kontaktieren des festen Trägers mit TiCl₄, und
iv) Rekuperieren der festen Komponente des Katalysators.

9. Verfahren nach Anspruch 8, wobei a, b, c und d jeweils 2 sind und L Ethylen ist.

10. Verfahren nach Anspruch 8 oder 9, wobei zumindest eines der R¹ in Formel (I) eine Gruppe -L-(N(R²)_{z}(R³)_{y} ist.

11. Verfahren nach einem der Ansprüche 8 bis 10, wobei zumindest eines von R² und R³ C₁ bis C₄ Aminoalkyl, bevorzugt eine Aminoethylgruppe ist.

12. Verwendung der internen organischen Verbindung wie in einem der Ansprüche 1 bis 4 definiert als internen Elektronendonator in festen Ziegler-Natta-Katalysatoren.

13. Erzeugungsprozess für C₂ bis C₁₀ Olefin(co)polymere, umfassend Polymerisieren eines C₂ bis C₁₀ Olefins oder eines Gemischs davon in der Gegenwart von: der festen Komponente des Katalysators wie in einem der Ansprüche 1 bis 6 definiert oder gemäß dem Verfahren wie in einem der Ansprüche 8 bis 11 definiert erzeugt; und eine organometallische Verbindung eines Gruppe 13-Metalls als einem Cokatalysator.

14. Prozess nach Anspruch 13, wobei ein Katalysator wie in Anspruch 7 definiert verwendet wird.

## Revendications

1. Composant de catalyseur de Ziegler-Natta solide comprenant un composé de métal de transition des Groupes 4 à 6, et un composé organique interne, dans lequel le composé organique interne est choisi parmi :
les polyalkylèneimines linéaires ou ramifiées de formule (I), ou les isomères ou mélanges de celles-ci
H₂N-(CH₂)ₐ-[(CH₂)_{b}-(N(R¹)-L-)ₙ-(CH₂)_{c}]ₘ-(CH₂)_{d}-NH₂ (I)
dans lequel,
chaque a, b, c et d est un nombre entier de 1 à 4, de préférence de 1 à 2,
n est un nombre entier de 3 à 7, de préférence de 4 à 6,
m est 2 à 60,
chaque L est indépendamment un alkylène de 1 à 4 atomes C, de préférence un alkylène de 2 atomes C
chaque R¹ est indépendamment H, ou un groupe -L-(N(R²)_{z}(R³)_{y}, dans lequel L est tel que précédemment défini, chaque R² et R³ sont indépendamment H ou un aminoalkyle en C₁ à C₄, et z et y sont 0, 1 ou 2, à condition que la somme z + y soit 2 ; ou
dans lequel le composé organique interne est de formule (II) 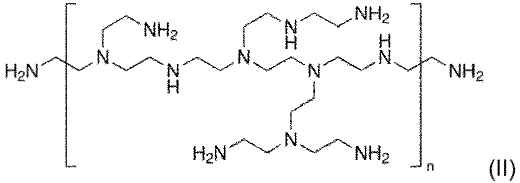
dans lequel n est approximativement 2.

2. Composant de catalyseur de Ziegler-Natta solide selon la revendication 1, dans lequel chaque a, b, c et d est 2 et L est l'éthylène.

3. Composant de catalyseur de Ziegler-Natta solide selon la revendication 1 ou 2, dans lequel au moins l'un des R¹ dans la formule (I) est un groupe -L-(N(R²)_{z}(R³)_{y}.

4. Composant de catalyseur de Ziegler-Natta solide selon l'une quelconque des revendications 1 à 3, dans lequel au moins l'un parmi R² et R³ est un aminoalkyle en C₁ à C₄, de préférence un groupe aminoéthyle.

5. Composant de catalyseur de Ziegler-Natta solide selon l'une quelconque des revendications 1 à 4, dans lequel le composé de métal de transition des Groupes 4 à 6 est un composé de métal de transition du Groupe 4, de préférence un composé de Ti.

6. Composant de catalyseur de Ziegler-Natta solide selon l'une quelconque des revendications précédentes, dans lequel le composant de catalyseur est supporté sur un support particulaire, de préférence un support à base de MgCl₂.

7. Catalyseur de Ziegler-Natta comprenant le composant de catalyseur de Ziegler-Natta solide selon l'une quelconque des revendications 1 à 6 et un co-catalyseur choisi parmi les composés organométalliques de métal du Groupe 13, de préférence les composés d'aluminium.

8. Procédé de production d'un composant de catalyseur de Ziegler-Natta solide comprenant
i) la fourniture d'un support solide à base de MgCl₂,
ii) la mise en contact du support solide de l'étape i) avec :
un composé organique interne de formule (I), ou des isomères ou mélanges de celui-ci
H₂N-(CH₂)ₐ-[(CH₂)_{b}-(N(R¹)-L-)ₙ-(CH₂)_{c}]ₘ-(CH₂)_{d}-NH₂ (I)
dans lequel,
chaque a, b, c et d est un nombre entier de 1 à 4, de préférence de 1 à 2,
n est un nombre entier de 3 à 7, de préférence de 4 à 6,
m est 2 à 60,
chaque L est indépendamment un alkylène de 1 à 4 atomes C, de préférence un alkylène de 2 atomes C
chaque R¹ est indépendamment H, ou un groupe -L-(N(R²)_{z}(R³)_{y}, dans lequel L est tel que précédemment défini, chaque R² et R³ sont indépendamment H ou un aminoalkyle en C₁ à C₄, et z et y sont 0, 1 ou 2, à condition que la somme z + y soit 2 ; ou
un composé organique interne de formule (II) 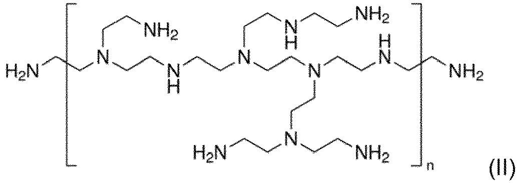 dans lequel n est approximativement 2 ;
iii) le traitement du support solide obtenu à l'étape ii) avec TiCl₄ ou
iii') simultanément à l'étape ii), le mise en contact du support solide avec TiCl₄, et
iv) la récupération du composant de catalyseur solide.

9. Procédé selon la revendication 8, dans lequel chaque a, b, c et d est 2 et L est l'éthylène.

10. Procédé selon la revendication 8 ou 9, dans lequel au moins l'un des R¹ dans la formule (I) est un groupe -L-(N(R²)_{z}(R³)_{y}.

11. Procédé selon l'une quelconque des revendications 8 à 10, dans lequel au moins l'un parmi R² et R³ est un aminoalkyle en C₁ à C₄, de préférence un groupe aminoéthyle.

12. Utilisation du composé organique interne tel que défini dans l'une quelconque des revendications 1 à 4 comme donneur d'électrons interne dans des catalyseurs de Ziegler-Natta solides.

13. Processus de production de (co)polymères d'oléfine en C₂ à C₁₀ comprenant la polymérisation d'une oléfine en C₂ à C₁₀ ou d'un mélange de celle-ci en présence : du composant de catalyseur solide tel que défini dans l'une quelconque des revendications 1 à 6 ou produit selon le procédé tel que défini dans l'une quelconque des revendications 8 à 11 ; et d'un composé organométallique d'un métal du Groupe 13 comme co-catalyseur.

14. Processus selon la revendication 13, dans lequel un catalyseur tel que défini dans la revendication 7 est utilisé.
